# FASCICULE DE BREVET EUROPEEN

(11) **EP 3 299 441 B1**
(45) Date de publication et mention de la délivrance du brevet: **30.01.2019**
(21) Numéro de dépôt: 17189530.3
(22) Date de dépôt: 06.09.2017
(51) Int. Cl.: C10G 45/02, C10G 45/32, C10G 65/06, B01D 19/00, C10G 7/02, B01D 3/40, C10G 11/18, C10G 65/02, C10G 45/08, C10L 1/00

(54) **PROCEDE DE TRAITEMENT D'UNE ESSENCE PAR SEPARATION EN TROIS COUPES**
BEHANDLUNGSVERFAHREN EINES BENZINS DURCH TRENNUNG IN DREI SCHNITTE
METHOD FOR TREATING A GASOLINE BY SEPARATION INTO THREE CUTS

(30) Priorité: 26.09.2016 FR 1659016
(43) Date de publication de la demande: 28.03.2018
(73) Titulaire: IFP Energies nouvelles, 92500 Rueil-Malmaison (FR)
(72) Inventeur: GOMEZ, Adrien, 69003 Lyon (FR); LOPEZ GARCIA, Clémentina, 69540 Irigny (FR); LEFLAIVE, Philibert, 69780 Mions (FR); PUCCI, Annick, 78290 Croissy sur Seine (FR); GODARD-PITHON, Marie, 92500 Rueil Malmaison (FR)
(74) Mandataire: IFP Energies nouvelles

(56) Documents cités:
- FR-A1- 2 811 328
- FR-A1- 3 014 896
- US-A1- 2006 096 893

## Description

La présente invention concerne un procédé pour réduire la teneur en composés soufrés d'une essence de type oléfinique, de manière à produire une essence dite désulfurée, tout en limitant la perte d'octane induite par l'hydrogénation des oléfines et en réduisant les coûts d'utilités et d'investissement.

### Etat de la technique

La production d'essences répondant aux nouvelles normes d'environnement nécessite que l'on diminue de façon importante leur teneur en soufre à des valeurs n'excédant généralement pas 50 ppm (mg/kg), et préférentiellement inférieures à 10 ppm.

Il est par ailleurs connu que les essences de conversion, et plus particulièrement celles provenant du craquage catalytique, qui peuvent représenter 30 à 50% du pool essence, présentent des teneurs élevées en oléfines et en soufre.

Le soufre présent dans les essences est pour cette raison imputable, à près de 90%, aux essences issues des procédés de craquage catalytique, qu'on appellera dans la suite essence de FCC (Fluid Catalytic Cracking selon la terminologie anglo-saxonne, que l'on peut traduire par craquage catalytique en lit fluidisé). Les essences de FCC constituent donc la charge préférée du procédé de la présente invention.

Parmi les voies possibles pour produire des carburants à faible teneur en soufre, celle qui a été très largement retenue consiste à traiter spécifiquement les bases essences riches en soufre par des procédés d'hydrodésulfuration en présence d'hydrogène et d'un catalyseur. Les procédés traditionnels désulfurent les essences de manière non sélective en hydrogénant une grande partie des mono-oléfines, ce qui engendre une forte perte en indice d'octane et une forte consommation d'hydrogène. Les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemple décrits dans les demandes de brevet EP 1077247 et EP 1174485.

Comme décrit dans les demandes de brevet EP 1077247 et EP 1800748, il est avantageux de réaliser avant l'étape d'hydrotraitement une étape d'hydrogénation sélective de la charge à traiter. Cette première étape d'hydrogénation consiste essentiellement à hydrogéner sélectivement les dioléfines, tout en transformant conjointement par alourdissement les composés soufrés légers saturés (par augmentation de leur poids moléculaire). Ces composés soufrés peuvent avoir un point d'ébullition inférieur au point d'ébullition du thiophène, tels que le méthanethiol, l'éthanethiol, le propanethiol et le diméthylsulfure. Par fractionnement de l'essence issue de l'étape d'hydrogénation sélective, on produit une coupe essence désulfurée légère (ou LCN pour Light Cracked Naphtha selon la terminologie anglo-saxonne) composée majoritairement de mono-oléfines à 5 ou 6 atomes de carbone sans perte d'octane, qui peut être valorisée au pool essence pour la formulation de carburant pour véhicules. Dans des conditions opératoires spécifiques, cette hydrogénation réalise sélectivement l'hydrogénation, au moins partielle, voire totale, des dioléfines présentes dans la charge à traiter en composés mono-oléfiniques, qui possèdent un meilleur indice d'octane. Un autre effet de l'hydrogénation sélective est de prévenir la désactivation progressive du catalyseur d'hydrodésulfuration sélective et/ou d'éviter un bouchage progressif du réacteur dû à la formation de gommes de polymérisation à la surface des catalyseurs ou dans le réacteur. En effet, les composés polyinsaturés sont instables et ont tendance à former des gommes par polymérisation.

La demande de brevet EP 2161076 divulgue un procédé d'hydrogénation sélective des composés polyinsaturés, et plus particulièrement des dioléfines, permettant de réaliser conjointement l'alourdissement des composés soufrés légers comme les mercaptans ou les sulfures. Ce procédé met en oeuvre un catalyseur contenant au moins un métal du groupe VIb et au moins un métal non noble du groupe VIII déposés sur un support poreux.

L'obtention d'une essence à très basse teneur en soufre, typiquement à une teneur inférieure à 10 ppm poids telle que requise en Europe, requiert par ailleurs au moins une étape d'hydrodésulfuration qui consiste à convertir les composés organo-soufrés en H₂S. Cependant si cette étape n'est pas correctement contrôlée elle peut entraîner l'hydrogénation d'une partie importante des mono-oléfines présentes dans l'essence et qui a alors pour conséquence une forte diminution de l'indice d'octane de l'essence ainsi qu'une surconsommation d'hydrogène. Un autre problème rencontré lors de l'étape d'hydrodésulfuration est la formation de composés de type mercaptans résultant de la réaction d'addition de l'H₂S formé dans le réacteur d'hydrodésulfuration sur les mono-oléfines présentes dans la charge essence. Les mercaptans cités, de formule chimique R-SH, où R est un groupement alkyle, sont également appelés thiols ou mercaptans de recombinaison et représentent généralement entre 20% et 80% poids du soufre résiduel dans les essences désulfurées.

Afin de limiter ces inconvénients, différentes solutions sont décrites dans la littérature pour désulfurer les essences de craquage à l'aide de combinaison d'étapes d'hydrodésulfuration et d'élimination des mercaptans de recombinaison par une technique judicieusement choisie pour éviter l'hydrogénation des mono-oléfines présentes, afin de préserver l'indice d'octane (voir par exemple US 7,799,210, US 6,960,291, US 6,387,249 et US 2007/114156).

Il apparait cependant que si ces combinaisons mettant en oeuvre une étape finale d'élimination des mercaptans de recombinaison sont particulièrement adaptées lorsqu'une très basse teneur en soufre est recherchée, celles-ci peuvent se révéler très couteuses lorsque la quantité de mercaptans à éliminer est élevée; en effet cela nécessite par exemple de fortes consommations d'adsorbant ou de solvant.

Parmi les solutions proposées dans la littérature pour produire des essences à teneur en soufre réduite, certaines proposent la séparation par distillation de la coupe large de l'essence issue d'un procédé de craquage (ou FRCN pour Full Range Cracked Naphtha selon la terminologie anglo-saxonne). La distillation a comme objectif dans certains brevets (par exemple, les brevets EP 1077247 et WO 02/072738) d'obtenir 2 coupes : une coupe légère (LCN) et une coupe lourde (HCN ou Heavy Cracked Naphtha selon la terminologie anglo-saxonne). L'essence FRCN peut être traitée en amont de la distillation par exemple par un procédé permettant l'hydrogénation sélective des dioléfines de l'essence et/ou permettant l'alourdissement des composés soufrés légers, de telle sorte qu'après l'opération de distillation, ces composés soufrés soient récupérés dans la coupe lourde HCN. Les composés soufrés de la coupe lourde sont ensuite éliminés de l'essence par différents procédés, par exemple, via une hydrodésulfuration catalytique effectuée avec un ou plusieurs réacteurs.

Une autre solution consiste à réaliser l'hydrodésulfuration catalytique de la charge essence en deux étapes d'hydrodésulfuration avec une étape intermédiaire de séparation de l'H₂S formé dans la première étape. Une telle solution est illustrée par exemple dans les brevets EP 1174485 et US 7,785,461.

Des brevets portent également sur des solutions combinant la séparation en une coupe lourde et une coupe légère et une hydrodésulfuration catalytique effectuée avec deux réacteurs avec séparation de l'H₂S formé dans la première étape. Dans ce cas, la séparation de la coupe légère peut être réalisée soit en amont des deux étapes d'hydrodésulfuration tel qu'illustré dans le brevet EP 1354930, seule la coupe lourde étant alors désulfurée, soit entre les deux étapes d'hydrodésulfuration, la première étape traitant alors la coupe large de l'essence issue d'un procédé de craquage (ou FRCN pour Full Range Cracked Naphtha selon la terminologie anglo-saxonne), la seconde uniquement la coupe lourde. Des exemples de cette dernière solution sont illustrés notamment dans US 6,913,688 et US 7,419,586.

D'autres solutions mettent en oeuvre la séparation par distillation de l'essence coupe large FRCN en plus de deux coupes pour produire une essence à teneur en soufre réduite, voire, des très faible teneurs en soufre, de l'ordre de 10 ppm poids. Dans ce type de procédés, les coupes obtenues sont traitées séparément ou en partie ensemble pour l'élimination du soufre organique d'au moins une partie des coupes obtenues, le but étant d'obtenir une essence désulfurée après mélange de toutes ou au moins une partie des coupes traitées.

Par exemple, le document US 2004/188327 décrit un procédé qui permet de réduire la teneur en soufre d'une essence FCC en séparant l'essence FRCN par une opération de distillation en trois coupes: une coupe légère, une coupe intermédiaire et une coupe lourde. La coupe lourde est désulfurée et l'effluent est combiné avec la coupe intermédiaire, l'ensemble étant désulfuré lors d'une seconde étape d'hydrodésulfuration. Il est précisé que les mercaptans contenus dans la coupe légère peuvent être éliminés soit par thioéthérification en amont de la séparation en trois coupes, soit par un traitement caustique en aval.

Le brevet US 6,103,105 décrit un procédé similaire, l'essence FRCN (Full Range Cracked Naphtha) étant également séparée en trois coupes par une opération de distillation. Il est précisé que la coupe légère représente entre 50 et 80% de l'essence et que la coupe lourde représente de 5 à 20% de l'essence FRCN. Il est également précisé que la coupe intermédiaire et la coupe lourde sont hydrodésulfurées dans un unique réacteur contenant deux lits catalytiques. La coupe lourde est traitée dans le 1^{er} lit catalytique et la coupe intermédiaire est ajoutée entre les deux lits de manière à réaliser un co-traitement avec la coupe lourde partiellement désulfurée issue du 1^{er} lit dans le 2^{ème} lit catalytique. Les auteurs indiquent une élimination presque totale du soufre ainsi qu'une hydrogénation quasi totale des oléfines de la coupe lourde.

Le brevet FR 2807061 décrit également un procédé de désulfuration d'essence comprenant une étape d'hydrogénation sélective suivie d'une séparation en au moins trois fractions. La fraction la plus légère est pratiquement exempte de soufre. La fraction la plus lourde est traitée au moins une fois pour désulfurer les composés soufrés insaturés de la coupe. La fraction intermédiaire est caractérisée par une teneur en oléfines et aromatiques relativement faible. Cette coupe subit en partie ou en totalité au moins une étape de désulfuration et de déazotation suivie d'un reformage catalytique.

Le brevet US 9,260,672 décrit un procédé pour produire une essence avec une faible perte d'indice d'octane. Selon les inventeurs, après saturation des dioléfines, l'essence FRCN est séparée par distillation en une coupe légère de point final 70°C, une coupe intermédiaire (70-90°C) et une coupe lourde (90-210°C). Les mercaptans de la coupe légère sont éliminés avec un traitement caustique dans un équipement connu sous le nom de CFC (ou Continuous Film Contactor selon la terminologie anglo-saxonne). La coupe lourde, contenant des composés soufrés principalement thiophéniques, est désulfurée par un procédé d'hydrodésulfuration catalytique ou d'adsorption réactive. La coupe intermédiaire peut être envoyée vers une unité d'isomérisation ou de reformage catalytique. Optionnellement la coupe intermédiaire peut être co-traitée avec la coupe légère dans un équipement CFC pour réduire la teneur en mercaptans, ou bien, cette coupe peut être co-traitée avec la coupe lourde. Ce procédé ne propose pas de traitement de désulfuration séparé pour la coupe intermédiaire.

La demande brevet US 2004/0195151 divulgue un procédé de désulfuration sélective d'essence FRCN. L'essence FRCN est introduite dans une colonne de distillation réactive permettant à la fois de réaliser un traitement de thioéthérification des mercaptans contenus dans la charge et une séparation en une coupe légère, une coupe intermédiaire et une coupe lourde. La coupe intermédiaire est soutirée par un soutirage latéral et est traitée dans un réacteur de désulfuration.

La demande de brevet US 2014/0054198 décrit un procédé pour réduire la teneur en soufre d'un flux d'hydrocarbures, le procédé comprenant la mise en contact d'une essence FRCN avec un catalyseur d'hydrogénation pour hydrogéner au moins une partie des diènes et convertir au moins une partie des mercaptans en thioéthers. Cette essence FRCN est ensuite fractionnée en une fraction légère, une fraction intermédiaire et une fraction lourde. La fraction lourde est désulfurée dans un procédé d'hydrodésulfuration catalytique. La fraction intermédiaire est mélangée avec de l'hydrogène et une coupe gazole pour former un mélange qui est mis en contact avec un catalyseur dans un réacteur d'hydrodésulfuration puis séparé afin d'obtenir la fraction intermédiaire désulfurée et récupérer la coupe gazole qui est recyclée dans le procédé et éventuellement purgée. FR 2 811 328 divulgue un procédé de désulfuration d'une coupe essence.

Un but de la présente invention est de proposer un procédé de désulfuration d'une essence oléfinique comprenant un fractionnement en trois coupes qui soit capable de produire, en limitant la perte d'indice d'octane, une essence à basse teneur en soufre total, typiquement inférieure à 30 ppm, ou encore préférentiellement inférieure à 10 ppm poids et à très faible teneur de mercaptans de recombinaison.

### Résumé de l'invention

La présente invention a pour objet un procédé de traitement d'une essence contenant des composés soufrés, des oléfines et des dioléfines, le procédé comprenant au moins les étapes suivantes :
a) on fractionne l'essence de façon à récupérer une coupe essence légère LCN et une première coupe essence lourde HCN ;
b) on réalise une première étape de désulfuration de la première coupe essence lourde HCN en présence d'un catalyseur d'hydrodésulfuration et de l'hydrogène, à une température comprise entre 160 et 450°C, à une pression comprise entre 0,5 et 8 MPa, avec une vitesse de liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire un premier effluent de désulfuration ;
c) on condense partiellement le premier effluent de désulfuration issu l'étape b) de façon à produire une phase gazeuse constituée essentiellement d'hydrogène et d'H₂S et une phase hydrocarbure liquide HCN comprenant de l'H₂S dissous;
d) on sépare la phase hydrocarbure liquide HCN en une coupe essence intermédiaire MCN et une deuxième coupe essence lourde HHCN ;
e) on réalise une deuxième étape de désulfuration de la deuxième coupe essence lourde HHCN en présence d'un catalyseur d'hydrodésulfuration et de l'hydrogène, à une température comprise entre 160 et 450°C, à une pression comprise entre 0,5 et 8 MPa, avec une vitesse de liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une seconde coupe essence lourde HHCN désulfurée,
le procédé comprenant :
- une étape c') dans laquelle on sépare l'H₂S dissous de la phase hydrocarbure liquide HCN issue de l'étape c) pour produire une phase hydrocarbure liquide HCN à basse teneur en H₂S dissous et ladite phase hydrocarbure liquide HCN à basse teneur en H₂S dissous étant traitée à l'étape d), ou
- une étape d') dans laquelle on sépare l'H₂S dissous de la coupe essence intermédiaire MCN issue de l'étape d) pour produire une coupe essence intermédiaire MCN à basse teneur en H₂S dissous.

Le procédé selon l'invention répond à la problématique de désulfurer une essence oléfinique tout en limitant l'hydrogénation des oléfines et en réduisant la teneur en mercaptans de recombinaison dans les effluents désulfurés, grâce à la combinaison des étapes mentionnées ci-dessus. Ainsi l'étape a) est opérée de manière à séparer une coupe essence légère à haut indice d'octane et à teneur réduite en composés soufrés sans faire intervenir une réaction catalytique d'hydrodésulfuration qui entrainerait une hydrogénation d'une partie des oléfines. L'étape b) réalise une désulfuration partielle de la coupe essence HCN (complémentaire de la coupe LCN) au cours de laquelle se forment des mercaptans de recombinaison issus de la réaction des oléfines avec l'H₂S formé. L'étape d) participe à l'efficacité du procédé grâce à la séparation de la coupe essence HCN partiellement désulfurée, judicieusement opérée, en une coupe essence intermédiaire MCN à faible teneur en soufre et en une deuxième coupe essence lourde HHCN contenant des composés soufrés organiques dont les mercaptans de recombinaison qui ont des températures d'ébullition plus élevées que ceux des oléfines dont ils sont issus. L'étape e) de désulfuration de la deuxième coupe essence lourde HHCN, qui peut être opérée dans des conditions plus sévères que celle de l'étape b) dans la mesure où les fractions les plus riches en oléfines ont été préalablement séparées, permet de réaliser un traitement en profondeur afin de fournir un effluent à basse teneur en soufre.

Le procédé selon l'invention comprend par ailleurs une étape de séparation de l'H₂S qui est produit lors de l'étape b) de désulfuration et dont une partie se retrouve sous forme dissoute dans la phase hydrocarbures liquide issue de l'étape c). Cette étape de séparation vise à fournir *in fine* une coupe essence lourde HHCN à basse teneur en H₂S qui peut être ensuite traitée dans l'étape de désulfuration e). La séparation de l'H₂S peut être effectuée directement sur la phase hydrocarbure liquide HCN issue de l'étape c) (étape c'). Alternativement, le procédé selon l'invention comprend une étape de séparation de l'H₂S (étape d') qui est effectuée après l'étape d) de séparation de la phase hydrocarbure liquide HCN en une coupe essence intermédiaire MCN (et qui contient également de l'H₂S) et une seconde coupe essence lourde HHCN plus lourde que la coupe MCN. Cette étape d') est donc effectuée sur la coupe essence intermédiaire MCN qui contient la majorité de l'H₂S formé. Par exemple l'étape d') consiste à envoyer dans une colonne de stripage la coupe intermédiaire MCN et un gaz permettant d'entrainer l'H₂S dissous présent dans la coupe essence MCN. L'étape d') peut aussi mettre en oeuvre une colonne de stabilisation permettant de séparer en tête de la colonne une coupe hydrocarbures C4⁻ contenant de l'H₂S et une coupe MCN stabilisée en fond de colonne.

L'étape a) est conduite de telle sorte que le point d'ébullition final de la coupe essence légère fournisse une coupe essence légère LCN à basse teneur en soufre (teneur en soufre total typiquement inférieure à 30 ppm poids et de préférence inférieure à 10 ppm poids) sans nécessiter une étape d'hydrodésulfuration ultérieure.

De préférence, la coupe essence intermédiaire MCN a une différence de température ΔT entre les points à 5% et à 95% de masse distillée qui est inférieure à 75°C (déterminés selon la méthode CSD décrite dans le document Oil Gas Sci. Technol. Vol. 54 (1999), No. 4, pp. 431-438). De préférence, la différence de température ΔT entre les points à 5% et à 95% de masse distillée est comprise entre 20 et 65°C. La coupe essence intermédiaire MCN peut contenir des hydrocarbures ayant de 5 à 8 atomes de carbone et majoritairement des hydrocarbures avec 6 atomes de carbone.

Selon l'invention, les étapes c') ou d') sont réalisées par stripage avec un gaz. Par exemple le gaz de stripage est de l'hydrogène, l'azote ou de la vapeur d'eau.

De manière alternative, les étapes c') ou d') sont réalisées par une méthode d'absorption.

Selon un autre mode de réalisation du procédé, les étapes c') ou d') sont réalisées dans une colonne de stabilisation configurée pour séparer une phase hydrocarbure C4⁻ contenant de l'H₂S et une phase hydrocarbure liquide HCN (stabilisée) à basse teneur en H₂S dissous, ladite phase hydrocarbure liquide HCN à basse teneur en H₂S dissous étant traitée à l'étape d).

Selon un autre mode de réalisation, les étapes c') et d) sont réalisées de manière concomitante dans une colonne de fractionnement configurée pour séparer :
- une phase gazeuse contenant essentiellement de l'H₂S qui est soutirée en tête de la colonne;
- la coupe essence intermédiaire MCN qui est soutirée au ballon de reflux ou latéralement au-dessous de la tête de la colonne ;
- la seconde coupe essence lourde HHCN épurée en H₂S dissous qui est soutirée en fond de la colonne.

Dans ce cas et de façon préférée la coupe essence intermédiaire MCN issue du fractionnement est envoyée dans une colonne de stabilisation, éventuellement dans celle qui traite la coupe HHCN désulfurée produite à l'étape e).

Selon l'invention, la coupe essence intermédiaire MCN est éventuellement traitée dans une étape f) d'hydrodésulfuration. L'étape f) est conduite en présence d'un catalyseur d'hydrodésulfuration et de l'hydrogène, à une température comprise entre 160 et 450°C, à une pression comprise entre 0,5 et 8 MPa, avec une vitesse de liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³.

De façon préférée, la coupe essence intermédiaire MCN désulfurée issue de l'étape f) est envoyée dans une colonne de stabilisation.

Dans un mode de réalisation alternatif, la coupe essence intermédiaire MCN est traitée dans un procédé d'extraction liquide/liquide ou de distillation extractive ou d'adsorption de manière à produire une coupe essence intermédiaire MCN à basse teneur en composés soufrés thiophéniques.

De façon avantageuse, avant l'étape a), l'essence est traitée en présence d'hydrogène et d'un catalyseur d'hydrogénation sélective de manière à hydrogéner au moins partiellement les dioléfines et réaliser une réaction d'alourdissement d'une partie des composés soufrés, l'étape a) étant opérée à une température comprise entre 100 et 190°C, à une pression comprise entre 1 et 4 MPa, avec une vitesse spatiale comprise entre 1 et 20 h⁻¹ et avec un rapport entre le débit d'hydrogène exprimé en normaux m3 par heure et le débit de charge à traiter exprimé en m³ par heure aux conditions standards compris entre 2 Nm³/m³ et 100 Nm³/m³.

Les catalyseurs d'hydrodésulfuration des étapes b) et e) comprennent au moins un élément du groupe VIII, au moins un élément du groupe VIb et un support.

Le procédé selon l'invention est employé pour traiter une coupe essence issue d'une unité de craquage catalytique ou thermique telle que par exemple une unité de cokéfaction différée (ou « Delayed Coker » selon la terminologie anglo-saxonne) ou de viscoréduction.

### Description détaillée de l'invention

Les autres caractéristiques et avantages de l'invention vont apparaître à la lecture de la description qui va suivre, donnée à titre uniquement illustratif et non limitatif, et en référence aux figures suivantes:
- Figure 1 est un premier schéma de principe du procédé selon l'invention;
- Figure 2 est un schéma de principe d'une variante du procédé selon l'invention;
- Figure 3 est un schéma de principe d'une autre variante du procédé selon l'invention.

Généralement, les éléments semblables sont dénotés par des références identiques dans les figures.

### - Description de la charge :

Le procédé selon l'invention permet de traiter tout type de coupe essence oléfinique contenant du soufre dont la gamme de points d'ébullition s'étend typiquement depuis environ les points d'ébullitions des hydrocarbures à 2 ou 3 atomes de carbone (C2 ou C3) jusqu'à environ 250°C, de préférence depuis environ les points d'ébullitions des hydrocarbures à 2 ou 3 atomes de carbone (C2 ou C3) jusqu'à environ 220°C, de manière plus préférée depuis environ les points d'ébullitions des hydrocarbures à 4 atomes de carbone jusqu'à environ 220°C. Le procédé selon l'invention peut aussi traiter des charges ayant des points finaux inférieurs à ceux mentionnés précédemment, tel que par exemple une coupe C5-200°C ou C5-160°C.

Le procédé selon l'invention permet de traiter de préférence une coupe essence issue d'une unité de craquage catalytique ou thermique telle que par exemple une unité de cokéfaction différée (ou « Delayed Coker » selon la terminologie anglo-saxonne) ou de viscoréduction. Une charge issue du mélange de coupes issues de ces différentes provenances est également possible. De manière particulière, la coupe essence du procédé selon l'invention est issue d'une unité de craquage catalytique dont la charge est prétraitée ou fonctionnant de manière à augmenter voire maximiser le rendement en propylène. Dans ce dernier cas, le mode de fonctionnement de l'unité de craquage catalytique se caractérise typiquement par des conditions opératoires sévères (haute température et avec un ratio catalyseur sur charge élevé), par l'utilisation d'un catalyseur comprenant une zéolite à sélectivité de forme (par exemple de structure cristalline MFI), avec un éventuel recycle d'une partie de la coupe essence produite ou d'un oligomérat de la coupe C4 dans l'unité de craquage catalytique, ce flux de recycle pouvant être traité soit en même temps que la charge (coprocessing selon la terminologie anglo-saxonne) soit dans un réacteur dédié afin de dissocier les conditions de craquage de la charge lourde et celles du flux recyclé (procédé dit à deux risers).

La teneur en soufre des coupes essences produites par craquage catalytique (FCC) ou non catalytique dépend de la teneur en soufre de la charge traitée, de la présence ou non d'un prétraitement de la charge, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même, dans certains cas, atteindre des valeurs de l'ordre de 4000 à 5000 ppm en poids.

Par exemple les essences issues d'unités de craquage catalytique (FCC) contiennent, en moyenne, entre 0,5% et 5% poids de dioléfines, entre 20% et 50% poids d'oléfines, entre 10 ppm et 0,5% poids de soufre dont généralement moins de 300 ppm de mercaptans. Les mercaptans se concentrent généralement dans les fractions légères de l'essence et plus précisément dans la fraction dont la température d'ébullition est inférieure à 120°C.

Les espèces soufrées contenues dans les charges traitées par le procédé de l'invention peuvent être des mercaptans ou des composés hétérocycliques, tels que par exemple les thiophènes ou les alkyl-thiophènes, ou des composés plus lourds, comme par exemple le benzothiophène. Ces composés hétérocycliques, contrairement aux mercaptans, ne peuvent pas être éliminés par les procédés extractifs. Ces composés soufrés sont par conséquent éliminés par un hydrotraitement, qui conduit à leur transformation en hydrocarbures et en H₂S.

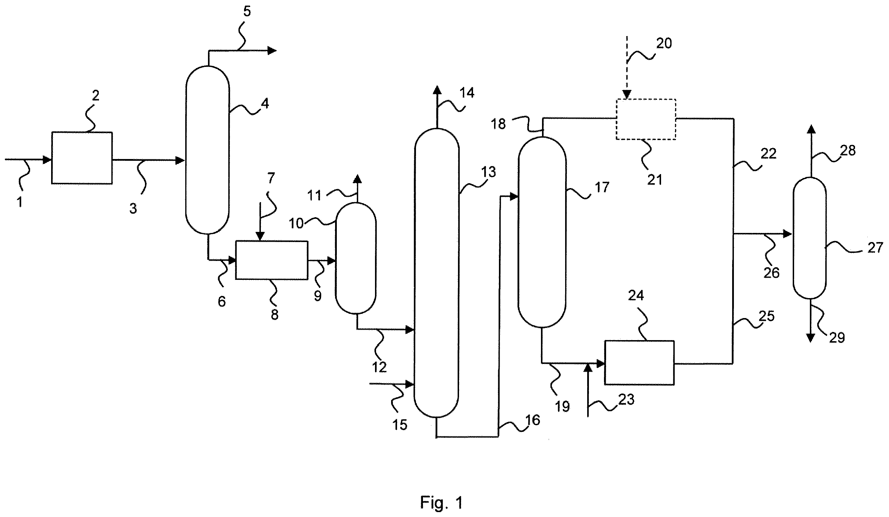

En référence à la Figure 1 qui représente un mode particulier de l'invention, une charge essence oléfinique par exemple une essence de craquage catalytique décrite ci-dessus est traitée dans une étape optionnelle qui réalise l'hydrogénation sélective des dioléfines et la conversion (alourdissement) d'une partie des composés mercaptans (RSH) présents dans la charge en thioéthers, par réaction avec des mono-oléfines. Typiquement les mercaptans qui peuvent réagir au cours de l'étape optionnelle d'hydrogénation sélective sont les suivants (liste non exhaustive): méthyl mercaptan, le mercaptan éthylique, n-propyl mercaptan, l'isopropyl mercaptan, l'iso-butylmercaptan, le tert-butyl mercaptan, le n-butylmercaptan, le secbutyl mercaptan, l'iso-amyle mercaptan, le n-amyle mercaptan, l'α-methyl-butyl mercaptan, l'α-éthylpropyl mercaptan, le n-hexyle mercaptan, le 2-mercapto-hexane. A cette fin, la charge essence FRCN est envoyée par la ligne 1 dans un réacteur catalytique d'hydrogénation sélective 2 contenant au moins un lit fixe ou mobile de catalyseur d'hydrogénation sélective des dioléfines et d'alourdissement des mercaptans. La réaction d'hydrogénation sélective des dioléfines et d'alourdissement des mercaptans s'effectue préférentiellement sur un catalyseur sulfuré comprenant au moins un élément du groupe VIII (groupes 8, 9 et 10 de la nouvelle classification périodique Handbook of Chemistry and Physics, 76ième édition, 1995-1996) et éventuellement au moins un élément du groupe VIb (groupe 6 de la nouvelle classification périodique Handbook of Chemistry and Physics, 76ième édition, 1995-1996) et un support. L'élément du groupe VIII est choisi de préférence parmi le nickel et le cobalt et en particulier le nickel. L'élément du groupe VIb, lorsqu'il est présent, est de préférence choisi parmi le molybdène et le tungstène et de manière très préférée le molybdène.

Le support du catalyseur est de préférence choisi parmi l'alumine, l'aluminate de nickel, la silice, le carbure de silicium, ou un mélange de ces oxydes. On utilise, de manière préférée, de l'alumine et de manière encore plus préférée, de l'alumine de haute pureté. Selon un mode de réalisation préféré le catalyseur d'hydrogénation sélective contient du nickel à une teneur en poids d'oxyde de nickel (sous forme NiO) comprise entre 4 et 12%, et du molybdène à une teneur en poids d'oxyde de molybdène (sous forme MoO3) comprise entre 6% et 18% et un rapport molaire nickel/molybdène compris entre 1 et 2,5, les métaux étant déposés sur un support constitué d'alumine et dont le taux de sulfuration des métaux constituant le catalyseur étant supérieur à 80%.

Lors de l'étape optionnelle d'hydrogénation sélective, l'essence à traiter est typiquement, mise en contact avec le catalyseur à une température comprise entre 50°C et 250°C, et de préférence entre 80°C et 220°C, et de manière encore plus préférée entre 90°C et 200°C, avec une vitesse spatiale liquide (LHSV) comprise entre 0,5 h⁻¹ et 20 h⁻¹, l'unité de la vitesse spatiale liquide étant le litre de charge par litre de catalyseur et par heure (l/l.h). La pression est comprise entre 0,4 MPa et 5 MPa, de préférence entre 0,6 et 4 MPa et de manière encore plus préférée entre 1 et 2 MPa. L'étape optionnelle d'hydrogénation sélective est typiquement réalisée avec un rapport H₂/HC compris entre 2 et 100 Nm³ d'hydrogène par m3 de charge, de manière préférée entre 3 et 30 Nm³ d'hydrogène par m³ de charge.

La totalité de la charge est généralement injectée à l'entrée du réacteur. Toutefois, il peut être avantageux, dans certains cas d'injecter une fraction ou la totalité de la charge entre deux lits catalytiques consécutifs placés dans le réacteur. Ce mode de réalisation permet notamment de continuer à opérer le réacteur si l'entrée du réacteur se trouve bouchée par des dépôts de polymères, de particules, ou de gommes présentes dans la charge.

Comme indiqué sur la Figure 1, la charge essence oléfinique est envoyée par la ligne 1 dans le réacteur d'hydrogénation sélective 2. Un effluent à basses teneurs en dioléfines et mercaptans est soutiré du réacteur 2 par la ligne 3 et est envoyé, selon l'étape a), dans une colonne de fractionnement 4 (ou splitter selon la terminologie anglo-saxonne) configurée pour séparer l'essence en deux coupes : une coupe essence légère LCN 5 (ou essence légère) et une (première) coupe essence lourde HCN 6 qui est constituée par la fraction lourde complémentaire de l'essence légère LCN. Le point d'ébullition final de la coupe légère est choisi de manière à fournir une coupe essence légère LCN à basse teneur en soufre (teneur en soufre total typiquement inférieure à 30 ppm poids et de préférence inférieure à 10 ppm poids) sans nécessiter une étape d'hydrodésulfuration ultérieure. Ainsi de préférence la coupe essence légère LCN est une coupe hydrocarbures C5⁻ (i.e. contenant des hydrocarbures ayant 5 et moins de 5 atomes de carbone par molécule). La première coupe essence lourde HCN qui est de préférence une coupe C6⁺ (i.e. contenant des hydrocarbures pouvant avoir 6 et plus de 6 atomes de carbone par molécule), est traitée dans une étape b) d'hydrodésulfuration sélective (HDS sélective). Cette étape b) a pour but, en utilisant un catalyseur décrit ci-après et de l'hydrogène, de convertir en H₂S et hydrocarbures une parties des composés soufrés de la coupe essence lourde HCN.

La première coupe essence lourde HCN 6 est ainsi mise en contact avec de l'hydrogène apporté par la ligne 7 et un catalyseur d'HDS sélective dans au moins une unité d'hydrodésulfuration 8 qui comporte au moins un réacteur à lit fixe ou mobile de catalyseur. La réaction d'hydrodésulfuration est généralement réalisée à une température comprise entre 160°C et 450°C, sous une pression comprise entre 0,5 et 8 MPa. La vitesse spatiale liquide est généralement comprise entre 0,5 et 20 h⁻¹ (exprimée en volume de liquide par volume de catalyseur et par heure), de préférence comprise entre 1 et 8 h-1. Le rapport H₂/première coupe essence lourde HCN est ajusté en fonction des taux d'hydrodésulfuration désirés dans la gamme comprise entre 50 et 1000 normaux m³ par m³ aux conditions standard. De préférence, le mélange de la première coupe essence lourde HCN avec l'hydrogène mis en contact avec le catalyseur dans l'étape b) est intégralement en phase vapeur. De préférence la température est comprise entre 200°C et 400°C, et de manière très préférée entre 200°C et 350°C. De préférence la pression est comprise entre 1 et 3 MPa.

Le catalyseur d'HDS sélective mis en oeuvre sous forme sulfurée, comprend au moins un élément du groupe VIII (groupes 8, 9 et 10 de la nouvelle classification périodique Handbook of Chemistry and Physics, 76ième édition, 1995-1996), au moins un élément du groupe VIb (groupe 6 de la nouvelle classification périodique Handbook of Chemistry and Physics, 76ième édition, 1995-1996) et un support. L'élément du groupe VIII est choisi de préférence parmi le nickel et le cobalt et en particulier le cobalt. L'élément du groupe VIb est de préférence choisi parmi le molybdène et le tungstène et de manière très préférée le molybdène. Le catalyseur pourra par exemple être un catalyseur tel que décrit dans les documents FR 2840315, FR 2840316, FR 2904242 ou FR 3023184. Le support du catalyseur est de préférence choisi parmi l'alumine, l'aluminate de nickel, la silice, le carbure de silicium, ou un mélange de ces oxydes. On utilise, de manière préférée, de l'alumine.

Il est à noter que l'hydrogène apportée par la ligne 7 peut être de l'hydrogène frais (make-up selon terminologie anglo-saxonne), soit de l'hydrogène dit "de recycle" provenant d'une étape du procédé, en particulier de l'étape b). De préférence l'hydrogène de la ligne 7 est de l'hydrogène frais. Le premier effluent de désulfuration issu de l'étape b) évacué par la ligne 9 puis est refroidi et partiellement condensé de manière à produire dans le séparateur 10 (étape c)) deux phases : une phase gazeuse 11 riche en hydrogène et contenant une partie de l'H₂S produit par la désulfuration dans l'étape b) et une phase hydrocarbure liquide HCN 12 contenant de l'H₂S dissous, des composés soufrés non convertis et des mercaptans de recombinaison.

Comme représenté sur la Figure 1, la phase hydrocarbure liquide HCN 12 comprenant de l'H₂S dissous soutirée du séparateur 10 est envoyée à une étape de séparation de l'H₂S dissous (étape c')). Dans le mode de réalisation de la Figure 1, cette étape c') est mise en oeuvre dans une colonne 13 de stripage de l'H₂S. La phase hydrocarbure liquide HCN comprenant de l'H₂S dissous 12 est mise en contact avec un gaz tel que de l'hydrogène apporté par la ligne 15 dans la colonne de stripage de l'H₂S 13 de laquelle on soutire en tête un flux gazeux 14 contenant le gaz de stripage et de l'H₂S et, en fond de colonne, la phase hydrocarbure liquide HCN à basse teneur en H₂S dissous 16. Il est à noter que lorsque le gaz de stripage est l'hydrogène, le flux gazeux 14 peut avantageusement être traité pour séparer l'hydrogène de l'H₂S de manière à produire un flux d'hydrogène purifié qui peut être recyclé dans une unité d'hydrodésulfuration, par exemple dans la première unité d'hydrodésulfuration 8. Pour l'étape d'élimination de l'H₂S il est également possible d'utiliser, en place d'une unité de stripage, un dispositif d'absorption utilisant par exemple des amines.

La phase hydrocarbure liquide HCN à basse teneur en H₂S dissous 16 qui est de préférence une coupe C6⁺ (i.e. contenant des hydrocarbures pouvant, de préférence, avoir 6 et plus de 6 atomes de carbone par molécule) est, selon l'étape d) du procédé, envoyée dans une colonne de fractionnement 17 configurée pour séparer en tête une coupe essence intermédiaire MCN qui est soutirée par la ligne 18 et en fond une seconde coupe essence lourde HHCN soutirée par la ligne 19. Etant donné que l'étape b) est opérée de manière à assurer une conversion élevée des composés soufrés thiophéniques légers (majoritairement thiophène et méthyl thiophènes), la coupe essence intermédiaire MCN obtenue après le fractionnement de l'étape d) ne contient que de faibles teneurs en composés soufrés thiophéniques non convertis. La coupe essence intermédiaire MCN est, grâce à l'étape d) de fractionnement, également débarrassée de la plupart des mercaptans de recombinaison contenus dans l'effluent qui se sont formés au cours de l'étape b) d'hydrodésulfuration. En effet de manière générale, les mercaptans de recombinaison ont des températures d'ébullition plus élevées que celles des oléfines dont ils sont issus. Par exemple le 2-méthyl-2-pentène (point d'ébullition en corps pur dans les conditions normales : 67°C) peut former un mercaptan de recombinaison avec 5 atomes de carbone comme le 2-méthyl-2-penthanethiol (point d'ébullition en corps pur dans les conditions normales : 125°C). Cette propriété est ainsi utilisée dans l'étape d) pour produire une coupe essence intermédiaire MCN à basse teneur en soufre et en mercaptans de recombinaison dans la mesure où lesdits mercaptans de recombinaison dont la température d'ébullition est supérieure à celle de la coupe essence intermédiaire MCN sont entrainés dans la seconde coupe essence lourde HHCN.

Pour obtenir la coupe essence intermédiaire MCN, les conditions opératoires de la colonne de fractionnement sont ajustées de manière à obtenir une coupe d'hydrocarbures dont la différence de température (ΔT) entre les températures correspondant à 5% et à 95% de la masse distillée qui soit inférieur ou égale à 75°C, de manière préférée qui soit comprise entre 20°C et 65°C. La température correspondant à 5% de la masse distillée de la coupe essence intermédiaire MCN est de préférence comprise entre 50°C et 80°C et la température correspondant à 95% de la masse distillée de la coupe essence intermédiaire MCN est de préférence comprise entre 88°C et 125°C. Par exemple la coupe essence intermédiaire MCN présente une température correspondant à 5% de la masse distillée qui est égale à 65°C ± 2°C, ou égale à 60°C ± 2°C ou égale à 55°C ± 2°C. De préférence la coupe essence intermédiaire MCN a une température correspondant à 95% de la masse distillée qui est égale à 120°C ± 2°C, voire égale à 115°C ± 2°C. La méthode utilisée pour déterminer les températures correspondant à 5% et 95% de la masse distillée est décrite dans le document Oil Gas Sci. Technol. Vol. 54 (1999), No. 4, pp. 431-438 sous le nom « CSD method » (abréviation de "Conventional Simulated Distillation" selon la terminologie anglo-saxonne) et qui peut être traduite par "Distillation Simulée Conventionnelle".

Dans un mode de réalisation préféré, la coupe essence intermédiaire MCN contient essentiellement des hydrocarbures ayant de 6 à 7 atomes de carbone et majoritairement des hydrocarbures avec 6 atomes de carbone.

Typiquement la teneur en soufre organique total dans la coupe essence intermédiaire MCN récupérée en tête de la colonne de fractionnement de l'étape d) est inférieure à 30 ppm poids, de préférence inférieure à 15 ppm poids et de manière plus préférée inférieure à 10 ppm poids de soufre total.

Conformément à l'étape e) du procédé, la seconde coupe essence lourde HHCN est traitée par hydrodésulfuration. Ladite coupe essence, soutirée du fond de la colonne 17 par la ligne 19, est mise en contact avec de l'hydrogène apporté par la ligne 23 dans au moins une unité d'hydrodésulfuration 24. Cette étape e) d'hydrodésulfuration sélective permet ainsi de convertir les composés soufrés de la coupe essence lourde HHCN (dont la majeure partie des mercaptans de recombinaison formés à l'étape d'hydrodésulfuration b)) en H₂S et hydrocarbures. L'étape e) d'hydrodésulfuration sélective est opérée en présence d'hydrogène amené par la ligne 23 et d'un catalyseur d'hydrodésulfuration sélective qui comprend au moins un élément du groupe VIII (groupes 8, 9 et 10 de la nouvelle classification périodique Handbook of Chemistry and Physics, 76ième édition, 1995-1996), au moins un élément du groupe VIb (groupe 6 de la nouvelle classification périodique Handbook of Chemistry and Physics, 76ième édition, 1995-1996) et un support. L'élément du groupe VIII est choisi de préférence parmi le nickel et le cobalt et en particulier le cobalt. L'élément du groupe VIb est de préférence choisi parmi le molybdène et le tungstène et de manière très préférée le molybdène. Le catalyseur pourra par exemple être un catalyseur tel que décrit dans les documents FR 2840315, FR 2840316, FR 2904242 ou FR 3023184. La réaction d'hydrodésulfuration est généralement réalisée à une température comprise entre 200°C et 450°C, sous une pression comprise entre 0,5 et 8 MPa. La vitesse spatiale liquide est généralement comprise entre 0,5 et 20 h⁻¹ (exprimée en volume de liquide par volume de catalyseur et par heure), de préférence comprise entre 1 et 8 h⁻¹. Le rapport H₂/coupe HHCN qui est ajusté en fonction des taux d'hydrodésulfuration désirés est dans la gamme comprise entre 50 et 1000 normaux m³ par m³ aux conditions standards.

De préférence la température est comprise entre 200°C et 400°C, et de manière très préférée entre 200°C et 350°C. De préférence la pression est comprise entre 0,5 et 3 MPa.

A l'issue de l'étape e) on soutire de l'unité d'hydrodésulfuration sélective, par la ligne 25, une seconde coupe essence lourde HHCN désulfurée qui présente typiquement une teneur en soufre organique inférieure à 30 ppm poids, de préférence inférieure à 15 ppm poids et de manière encore plus préférée inférieure à 10 ppm poids.

De façon optionnelle, la coupe essence intermédiaire MCN 18 est également traitée dans une étape d'hydrodésulfuration. A cette fin, elle est mise en contact avec de l'hydrogène apporté par la ligne 20 et un catalyseur d'hydrodésulfuration sélective dans au moins une unité d'hydrodésulfuration 21 qui comporte au moins un réacteur à lit fixe ou mobile de catalyseur (étape optionnelle f)). La réaction d'hydrodésulfuration est généralement réalisée à une température comprise entre 160°C et 450°C, sous une pression comprise entre 0,5 et 8 MPa. La vitesse spatiale liquide est généralement comprise entre 0,5 et 20 h⁻¹ (exprimée en volume de liquide par volume de catalyseur et par heure), de préférence comprise entre 1 et 8 h⁻¹. Le rapport H₂/coupe essence intermédiaire MCN est ajusté en fonction des taux d'hydrodésulfuration désirés dans la gamme comprise entre 50 et 1000 normaux m³ par m³ aux conditions standard. De préférence, le mélange de la coupe essence intermédiaire MCN avec l'hydrogène mis en contact avec le catalyseur dans l'étape optionnelle f) est intégralement en phase vapeur. De préférence la température est comprise entre 200°C et 400°C, et de manière très préférée entre 200°C et 350°C. De préférence la pression est comprise entre 1 et 3 MPa. Le catalyseur mis en oeuvre à l'étape f) peut être un catalyseur du type de celui utilisé pour les étapes b) et e). Il est à noter que l'hydrogène apportée par la ligne 20 peut être de l'hydrogène frais (make-up selon terminologie anglo-saxonne), soit de l'hydrogène dit "de recycle" provenant d'une étape du procédé.

Le procédé peut comprendre une étape de stabilisation des effluents issus des étapes e) et f) d'hydrodésulfuration des coupes essence HHCN et MCN respectivement afin d'en séparer la fraction d'hydrocarbures légers C4- en mélange avec l'H₂S formé lors des étapes d'hydrodésulfuration et l'hydrogène. Selon le mode de réalisation de la Figure 1, les coupes essence intermédiaire MCN désulfurée de la ligne 22 et la seconde coupe essence lourde HHCN désulfurée de la ligne 25 sont envoyées en mélange par la ligne 26 dans une colonne de stabilisation 27 de laquelle on soutire en tête de la colonne par la ligne 28 la fraction hydrocarbures C4⁻ en mélange avec de l'H₂S et en fond de la colonne, un mélange d'essences MCN et HHCN désulfurées, stabilisé, par la ligne 29.

De façon alternative les composés soufrés thiophéniques résiduels contenus dans la coupe essence intermédiaire MCN peuvent être extraits avec un solvant polaire approprié dans un procédé d'extraction Liquide-Liquide ou de distillation extractive ou encore par adsorption sur des adsorbants appropriés (silices, alumines, zéolithes tels que décrits dans le document FR 2 889 539 A1).

Les coupes essence légère LCN, et le mélange d'essences MCN et HHCN désulfurées, produites par le procédé selon l'invention, sont avantageusement utilisées comme bases pour la formulation d'un carburant essence.

Selon un autre mode de réalisation non représenté, le procédé ne met pas en oeuvre l'étape c') de séparation de l'H₂S dissous dans la phase hydrocarbure liquide HCN, mais emploie une étape d') en aval de l'étape d) de séparation des coupes essence intermédiaire MCN et deuxième coupe essence lourde HHCN. L'étape d') consiste à enlever l'H₂S présent dans la coupe essence intermédiaire MCN obtenue à l'étape d). Par exemple, l'étape d') est effectuée par stripage avec un gaz ou en employant une colonne de stabilisation qui sépare en tête de colonne un flux contenant une coupe hydrocarbures C4⁻ et de l'H₂S et en fond une coupe essence intermédiaire MCN stabilisée.

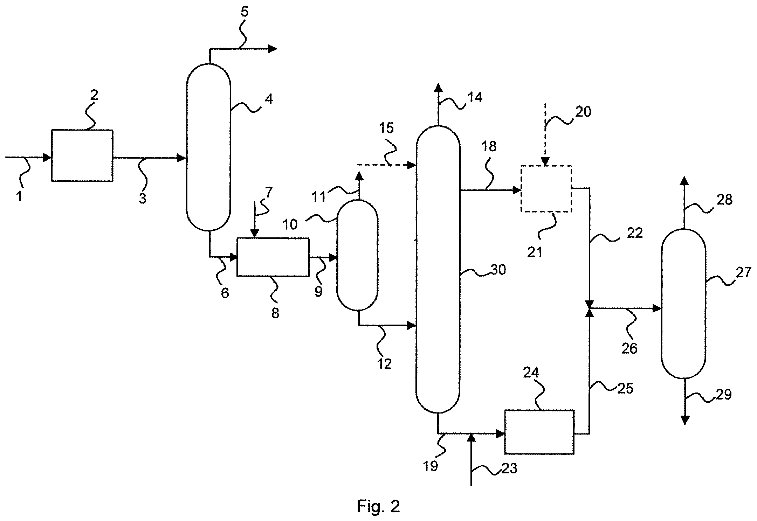

La Figure 2 est un schéma du procédé selon une autre forme de réalisation. Ce mode de réalisation se distingue de celui de la Figure 1 par la méthode de mise en oeuvre des étapes c') et d). En référence à la Figure 2, la phase hydrocarbure liquide HCN comprenant de l'H₂S dissous, issue de l'étape c) est envoyée par la ligne 12 dans une colonne de fractionnement 17' conçue et opérée de manière à réaliser les étapes c') et d) de façon concomitante, afin de séparer :
- une phase gazeuse contenant essentiellement de l'H₂S qui est soutirée en tête de la colonne 17' par la ligne 14;
- la coupe essence intermédiaire MCN 18 qui est soutirée latéralement à quelques plateaux au-dessous de la tête de la colonne ;
- la deuxième coupe essence lourde HHCN 19 qui est soutirée en fond de la colonne.

La colonne 17' peut être optionnellement alimentée par la ligne 15 avec un gaz de stripage tel que l'hydrogène afin d'améliorer la séparation de l'H₂S.

La coupe essence intermédiaire MCN 18 peut être ensuite traitée dans un réacteur d'hydrodésulfuration comme déjà indiqué dans la Figure 1 (étape optionnelle f) et ensuite stabilisée seule ou en mélange avec la seconde coupe essence lourde HHCN désulfurée issue de l'étape e).

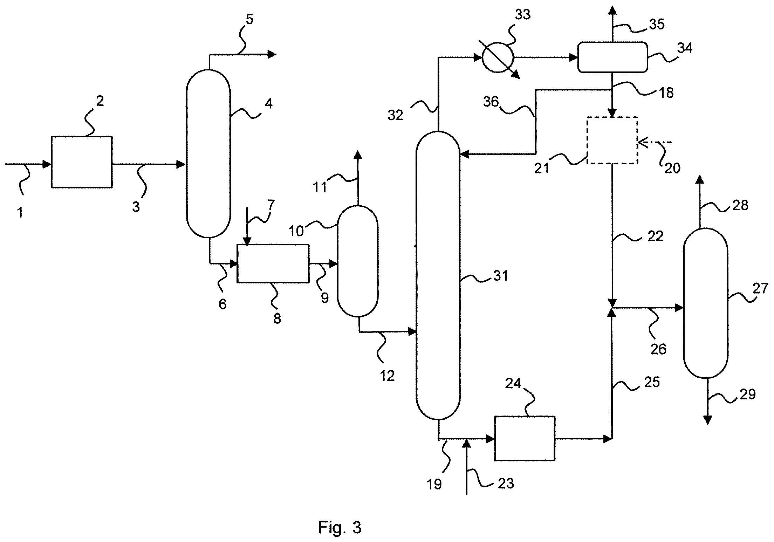

La Figure 3 montre un mode de réalisation alternatif du procédé selon l'invention dans lequel les étapes c') et d) sont réalisées de manière concomitante dans une colonne de fractionnement 17" configurée pour séparer :
- en tête de la colonne une phase gazeuse contenant des hydrocarbures de la coupe essence intermédiaire MCN et de l'H₂S (ligne 18');
- la deuxième coupe essence lourde HHCN (à basse teneur en H₂S dissous) qui est soutirée en fond de la colonne par la ligne 19;

La phase gazeuse 18' est alors refroidie afin de condenser la coupe essence intermédiaire MCN. A cette fin, ladite phase gazeuse 18' est refroidie au moyen de l'unité froide 30 et l'effluent refroidi est ensuite envoyé à un ballon séparateur 31 permettant de récupérer un flux gazeux 32 contenant essentiellement de l'hydrogène et de l'H₂S avec éventuellement des hydrocarbures légers et en fond du ballon une phase hydrocarbure liquide 18 correspondant à la coupe essence intermédiaire MCN. Comme indiqué sur la Figure 3, une partie de l'essence intermédiaire MCN 18 est recyclée vers la colonne de fractionnement 17" comme liquide de reflux. L'autre partie de l'essence intermédiaire MCN peut être hydrodésulfurée (selon l'étape optionnelle f) ou simplement stabilisée. L'étape de stabilisation de la coupe essence intermédiaire MCN (désulfurée ou pas) peut être opérée en mélange avec la coupe seconde coupe essence lourde HHCN désulfurée dans la colonne 27.

### Exemple 1 : Prétraitement de la charge essence FCC par hydrogénation sélective

Le Tableau 1 donne les caractéristiques d'une essence FRCN traitée par le procédé selon la Figure 1 de la présente invention.

L'essence FCC (ligne 1) est traitée dans le réacteur d'hydrogénation sélective 2 en présence d'un catalyseur A (étape optionnelle). Le catalyseur A est un catalyseur de type NiMo sur alumine gamma. Les teneurs en métaux sont respectivement 7% poids NiO et 11% poids MoO₃ par rapport au poids total du catalyseur, soit un rapport molaire Ni/Mo de 1,2. La surface spécifique du catalyseur est de 230 m²/g. Préalablement à son utilisation, le catalyseur A est sulfuré à pression atmosphérique en banc de sulfuration sous mélange H₂S/H₂ constitué de 15% volumique d'H₂S à 1 L/g·h de catalyseur et à 400°C durant deux heures. Ce protocole permet d'obtenir un taux de sulfuration supérieur à 80%.

L'essence FRCN (ligne 1) est mise en contact avec de l'hydrogène dans un réacteur qui contient le catalyseur A. Cette étape du procédé réalise l'hydrogénation sélective des dioléfines et la conversion (alourdissement) d'une partie des composés mercaptans (RSH) présents dans la charge. La teneur en dioléfines est directement proportionnelle à la valeur de la MAV (indice d'anhydride maleique ou Maleic Anhydrid Value selon terminologie anglosaxonne). Les dioléfines sont des composés indésirables car ils sont des précurseurs de gommes dans les essences.

Les conditions opératoires mises en oeuvre dans le réacteur d'hydrogénation sélective sont : Température: 140°C, Pression totale: 2,5 MPa, rapport volumique H₂ ajouté/charge essence FRCN : 5 normaux litres d'hydrogène par litre d'essence (vol/vol), vitesse volumique horaire (VVH) : 3 h⁻¹.

**Tableau 1 : Caractéristiques de la charge FRCN (1) et l'effluent d'hydrogénation sélective (3).**

| | | Ligne 1 FRCN | Ligne 3 Effluent d'hydrogénation sélective |
|---|---|---|---|
| Teneur en soufre organique | (ppm poids S) | 978 | 980 |
| MAV | (mg/g) | 12 | 0.6 |
| Teneur en oléfines | (% poids) | 31% | 31% |
| Distillation Simulée | | | |
| 5% masse distillée | (°C) | 23 | 23 |
| 50% masse distillée | (°C) | 95 | 95 |
| 95% masse distillée | (°C) | 198 | 198 |

L'effluent de l'étape d'hydrogénation sélective (3) à faible teneur en dioléfines conjuguées (MV=0.6 mg/g) et faible teneur en composés soufrés légers (alourdis dans l'étape d'hydrogénation sélective) est envoyé dans une colonne de fractionnement (4) selon l'étape a) de la présente invention afin de séparer en tête une essence légère LCN (5) et en fond de la colonne une première coupe essence lourde HCN (6). Les caractéristiques de l'essence légère LCN et de la première coupe essence lourde HCN sont indiquées sur le Tableau 2. Comme indiqué dans le tableau 2, l'essence LCN obtenue (ligne 5) a une faible teneur en soufre (15 ppm). La première coupe essence lourde HCN qui correspond à environ 68 % massique de l'essence FRCN, a une teneur très élevée en soufre (1430 ppm) et nécessite un traitement supplémentaire avant d'être incorporée au pool essence.

**Tableau 2 : Caractéristiques des coupes : Essence légère LCN et première coupe essence lourde HCN**

| | | Ligne 5 | Ligne 6 |
|---|---|---|---|
| | | LCN | HCN |
| Pourcentage massique de la coupe | % | 32 | 68 |
| Teneur en soufre organique | (ppm poids S) | 15 | 1430 |
| Teneur en oléfines | (% poids) | 48% | 23% |

### Exemple 2 (comparatif) : Hydrodésulfuration de la première coupe essence lourde HCN

Cet exemple fait référence à l'art antérieur (brevet EP 1174485). La première coupe essence lourde HCN obtenue dans l'exemple 1 est mélangée avec de l'hydrogène et traitée dans une unité d'hydrodésulfuration sélective 8 qui correspond à une première étape d'hydrodésulfuration. La première étape d'hydrodésulfuration est conduite en présence d'un catalyseur CoMo supporté sur alumine (HR806 vendu par la société Axens). La pression est de 2 MPa, la vitesse spatiale du liquide (exprimée en volume de liquide par volume de catalyseur et par heure) est de 4 h⁻¹, le rapport H₂/coupe HCN est de 360 normaux m³ par m³ dans les conditions standards. L'effluent du réacteur est ensuite condensé 10 et strippé 13 avec de l'hydrogène de manière à extraire l'H₂S dissous. La teneur en soufre organique et en oléfines de la phase hydrocarbure liquide HCN à basse teneur en H₂S (ligne 16) sont indiquées dans le Tableau 3.

La phase hydrocarbure liquide HCN à basse teneur en H₂S (16) est ensuite traitée dans une seconde unité d'hydrodésulfuration sélective 24 qui correspond à une deuxième étape d'hydrodésulfuration. Cette étape est réalisée en présence d'un catalyseur CoMo supporté sur alumine (HR806 vendu par la société Axens). La pression est de 2 MPa, la vitesse spatiale du liquide (exprimée en volume de liquide par volume de catalyseur et par heure) est de 4 h⁻¹, le rapport H₂/hydrocarbure liquide est de 360 normaux m³ par m³ dans les conditions standards. L'effluent du réacteur 24 peut être envoyé, par exemple, vers une colonne de stabilisation, afin de récupérer en tête de la colonne l'hydrogène et l'H2S, éventuellement avec des hydrocarbures légers et en fond de la colonne une coupe hydrocarbures HCN issue d'une deuxième étape d'hydrodésulfuration. Les caractéristiques de l'HCN obtenue après la deuxième étape d'hydrodésulfuration et stabilisée, sont illustrées sur le Tableau 3.

**Tableau 3 : Caractéristiques de l'essence lourde HCN après la première et la deuxième étape d'hydrodésulfuration**

| | | Essence lourde HCN hydrodésulfurée Première étape | Essence lourde HCN hydrodésulfurée Deuxième étape |
|---|---|---|---|
| Teneur en soufre organique | (ppm S) | 150 | 15 |
| Teneur en oléfines | (% poids) | - | 15 |

**Tableau 4 : Perte d'oléfines entre la première coupe essence lourde HCN et l'essence obtenue après la deuxième étape d'hydrodésulfuration**

| | | Perte d'oléfines (absolue) |
|---|---|---|
| Perte d'oléfines | (% poids) | 7,8% |

Le procédé selon l'exemple 2 permet d'obtenir, une essence HCN à basse teneur en soufre (15 ppm poids) . La perte d'oléfines entre la première coupe essence lourde HCN et l'essence stabilisée obtenue après la deuxième étape d'hydrodésulfuration est de 7.8% massique (en absolu)

### Exemple 3: Hydrodésulfuration de la première coupe essence lourde HCN (selon la présente invention)

Cet exemple fait référence à la présente invention. La première coupe essence lourde HCN obtenue dans l'exemple 1 est mélangée avec de l'hydrogène et traitée dans une unité d'hydrodésulfuration sélective (8) qui correspond à l'étape b) de la présente invention. L'étape d'hydrodésulfuration b) se réalise en présence d'un catalyseur CoMo supporté sur alumine (HR806 vendu par la société Axens). La pression est de 2 MPa, la vitesse spatiale du liquide (exprimée en volume de liquide par volume de catalyseur et par heure) est de 4 h⁻¹, le rapport H₂/coupe HCN est de 360 normaux m³ par m³ dans les conditions standards. L'effluent du réacteur 8 est ensuite condensé (selon l'étape c) de l'invention) afin d'éliminer l'hydrogène et l'hydrogène sulfuré en phase vapeur. La phase hydrocarbure liquide HCN comprenant de l'H₂S dissous est envoyée vers une étape de stripage (étape c' selon l'invention) illustrée par la colonne de stripage 13 de la Figure 1. On soutire en tête de la colonne 13 un flux gazeux 14 contenant le gaz de stripage et de l'H₂S et, en fond de colonne, une phase hydrocarbure liquide HCN à basse teneur en H₂S dissous 16.

La phase hydrocarbure liquide HCN à basse teneur en H₂S dissous (et qui a été au moins partiellement hydrodésulfurée dans l'étape b), est envoyée dans une colonne de fractionnement 17 (étape d selon la présente invention). La colonne est configurée pour séparer en tête une coupe essence intermédiaire MCN qui est soutirée par la ligne 18 et en fond une seconde coupe essence lourde HHCN soutirée par la ligne 19. Le fonctionnement de la colonne de fractionnement est réglé de manière à obtenir une coupe MCN dont la température à 95% de la masse distillée de la coupe essence intermédiaire MCN est de 102°C±5°C (températures mesurés selon la méthode CSD décrite dans le document Oil Gas Sci. Technol. Vol. 54(1999), No. 4, pp. 431-438). Le fonctionnement de la colonne de fractionnement est aussi réglé de manière à obtenir en fond de la colonne, une deuxième coupe essence lourde HHCN dont la température à 5% de masse distillée est de 102°C±5°C (températures mesurés selon la méthode CSD décrite dans le document Oil Gas Sci. Technol. Vol. 54(1999), No. 4, pp. 431-438).

La deuxième coupe essence lourde HHCN 19 est mélangée avec de l'hydrogène et traitée dans une unité d'hydrodésulfuration sélective 24 selon l'étape e) de la présente invention. L'étape d'hydrodésulfuration e) se réalise en présence d'un catalyseur CoMo supporté sur alumine (HR806 vendu par la société Axens). La pression est de 2 MPa, la vitesse spatiale du liquide (exprimée en volume de liquide par volume de catalyseur et par heure) est de 4 h⁻¹, le rapport H₂/coupe HCN est de 360 normaux m³ par m³ dans les conditions standards. La seconde coupe essence lourde HHCN désulfurée est stabilisée après l'étape e).

Les caractéristiques de la coupe essence intermédiaire MCN 18, de la seconde coupe essence lourde HHCN 19 et de la seconde coupe essence lourde HHCN désulfurée (après stabilisation) sont indiquées dans le Tableau 5.

**Tableau 5 : Caractéristiques de la phase hydrocarbure liquide HCN à basse teneur en H2S, de la coupe essence intermédiaire MCN, de la seconde coupe essence lourde HHCN et de la seconde coupe essence lourde HHCN désulfurée et stabilisée selon la présente invention**

| | | Phase hydrocarbure liquide HCN à basse teneur en H₂S Ligne 16 | Coupe essence intermédiaire MCN | Seconde coupe essence lourde HHCN | Seconde coupe essence lourde HHCN désulfurée et stabilisée |
|---|---|---|---|---|---|
| Teneur en soufre organique | (ppm poids S) | 72 | 15 | 107 | 15 |
| Teneur en oléfines | (% poids) | 17% | 28% | 10% | 9% |
| Pourcentage massique de la coupe (par rapport à la FRCN) | (% poids) | 68% | 26% | 42% | 42% |

**Tableau 6 : Perte d'oléfines entre la première coupe essence lourde HCN et le mélange d'essences coupe essence intermédiaire MCN et seconde coupe essence lourde HHCN désulfurée et stabilisée**

| | | Perte d'oléfines (absolue) |
|---|---|---|
| Perte d'oléfines | (% poids) | 6,6% |

Le procédé selon l'invention permet ainsi d'obtenir, après stabilisation une coupe essence intermédiaire MCN à basse teneur en soufre organique (15 ppm) et, après stabilisation, une seconde coupe essence lourde HHCN désulfurée à basse teneur en soufre organique (15 ppm). Ces essences peuvent, avec l'essence légère LCN obtenue dans l'exemple 1, être valorisées dans pool essence pour la formulation de carburant pour véhicules.

De manière très avantageuse, le mélange de la première coupe essence lourde HCN et le mélange d'essences coupe essence intermédiaire MCN et seconde coupe essence lourde HHCN désulfurée et stabilisée (selon l'exemple 3 de la présente invention) permet de produire une essence avec une faible teneur en soufre (15 ppm S) tout en diminuant la perte absolue d'oléfines par comparaison à l'essence lourde HCN désulfurée après la deuxième étape de désulfuration (présentée dans l'exemple 2 comparatif). En effet dans l'exemple 2 la perte d'oléfines (en % massique) entre la première coupe essence lourde HCN et l'essence obtenue après deuxième étape d'hydrodésulfuration est de 7.8% et dans l'exemple 3 selon l'invention la perte d'oléfines entre la première coupe essence lourde HCN et le mélange d'essences coupe essence intermédiaire MCN et seconde coupe essence lourde HHCN désulfurée et stabilisée est de 6.6%. Ainsi, l'exemple 3 selon l'invention permet de faire préserver 15% relatif des oléfines présentes dans la première coupe essence lourde HCN tout en produisant une essence à même basse teneur en soufre (15 ppm). La préservation des oléfines présentes dans la première coupe essence lourde HCN a un impact positif sur les indices d'octane de l'essence produite.

## Revendications

1. Procédé de désulfuration d'une coupe essence contenant composés soufrés, des oléfines et des dioléfines, comprenant au moins les étapes suivantes :
a) on fractionne l'essence de façon à récupérer une coupe essence légère LCN et une première coupe essence lourde HCN ;
b) on réalise une première étape de désulfuration de la première coupe essence lourde HCN en présence d'un catalyseur d'hydrodésulfuration et de l'hydrogène, à une température comprise entre 160 et 450°C, à une pression comprise entre 0,5 et 8 MPa, avec une vitesse de liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire un premier effluent de désulfuration ;
c) on condense partiellement le premier effluent de désulfuration issu l'étape b) de façon à produire une phase gazeuse constituée essentiellement d'hydrogène et d'H₂S et une phase hydrocarbure liquide HCN comprenant de l'H₂S dissous;
d) on sépare la phase hydrocarbure liquide HCN en une coupe essence intermédiaire MCN et une deuxième coupe essence lourde HHCN ;
e) on réalise une deuxième étape de désulfuration de la deuxième coupe essence lourde HHCN en présence d'un catalyseur d'hydrodésulfuration et de l'hydrogène, à une température comprise entre 160 et 450°C, à une pression comprise entre 0,5 et 8 MPa, avec une vitesse de liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une seconde coupe essence lourde HHCN désulfurée,
le procédé comprenant :
• une étape c') dans laquelle on sépare l'H₂S dissous de la phase hydrocarbure liquide HCN issue de l'étape c) pour produire une phase hydrocarbure liquide HCN à basse teneur en H₂S dissous et ladite phase hydrocarbure liquide HCN à basse teneur en H₂S dissous étant traitée à l'étape d), ou
• une étape d') dans laquelle on sépare l'H₂S dissous de la coupe essence intermédiaire MCN issue de l'étape d) pour produire une coupe essence intermédiaire MCN à basse teneur en H₂S dissous.

2. Procédé selon la revendication 1, dans lequel l'étape c') ou d') est réalisée par stripage avec un gaz.

3. Procédé selon la revendication 1, dans lequel l'étape c') ou d') est réalisée par une méthode d'absorption.

4. Procédé selon la revendication 1, dans lequel l'étape c') ou d') est réalisée dans une colonne de stabilisation configurée pour séparer une phase hydrocarbure C4⁻ contenant de l'H₂S et la phase hydrocarbure liquide HCN à basse teneur en H₂S dissous.

5. Procédé selon la revendication 1, dans lequel les étapes c') et d) sont réalisées de manière concomitante dans une colonne de fractionnement configurée pour séparer :
• une phase gazeuse contenant essentiellement de l'H₂S qui est soutirée en tête de la colonne;
• la coupe essence intermédiaire MCN qui est soutirée latéralement au-dessous de la tête de la colonne ;
• la deuxième coupe essence lourde HHCN qui est soutirée en fond de la colonne.

6. Procédé selon la revendication 1, dans lequel dans lequel les étapes c') et d) sont réalisées de manière concomitante dans une colonne de fractionnement configurée pour séparer :
• une phase gazeuse contenant des hydrocarbures et de l'H₂S en tête de la colonne;
• la deuxième coupe essence lourde HHCN qui est soutirée en fond de la colonne;
et dans lequel on refroidit et on condense ladite phase gazeuse de manière à produire un flux gazeux contenant essentiellement de l'H₂S et la coupe essence intermédiaire MCN.

7. Procédé selon la revendication 6, dans lequel la coupe essence intermédiaire MCN est envoyée dans une colonne de stabilisation.

8. Procédé selon l'une des revendications précédentes, dans lequel la coupe essence intermédiaire MCN a une différence de température ΔT entre les points à 5% et à 95% de masse distillée qui est inférieure ou égale à 75°C.

9. Procédé selon la revendication 8, dans lequel la différence de température ΔT entre les points à 5% et à 95% de masse distillée de la coupe essence intermédiaire MCN est comprise entre 20 et 65°C.

10. Procédé selon l'une des revendications précédentes, dans lequel la seconde coupe essence lourde HHCN désulfurée issue de l'étape e) est envoyée dans une colonne de stabilisation.

11. Procédé selon l'une des revendications précédentes, dans lequel la coupe essence intermédiaire MCN est traitée dans une étape f) d'hydrodésulfuration.

12. Procédé selon la revendication 11, dans lequel la coupe essence intermédiaire MCN désulfurée issue de l'étape f) est envoyée dans une colonne de stabilisation.

13. Procédé selon l'une des revendications 1 à 10, dans lequel la coupe essence intermédiaire MCN est traitée dans un procédé d'extraction liquide/liquide ou de distillation extractive ou d'adsorption de manière à produire une coupe essence intermédiaire MCN à basse teneur en composés soufrés thiophéniques.

14. Procédé selon l'une des revendications précédentes, dans lequel avant l'étape a), l'essence est traitée en présence d'hydrogène et d'un catalyseur d'hydrogénation sélective de manière à hydrogéner au moins partiellement les dioléfines et réaliser une réaction d'alourdissement d'une partie des composés soufrés, l'étape a) étant opérée à une température comprise entre 50 et 250°C, à une pression comprise entre 0,4 et 5 MPa, avec une vitesse spatiale comprise entre 0,5 et 20 h⁻¹ et avec un rapport entre le débit d'hydrogène exprimé en normaux m3 par heure et le débit de charge à traiter exprimé en m³ par heure aux conditions standards compris entre 2 Nm³/m³ et 100 Nm³/m³.

15. Procédé selon l'une des revendications précédentes, dans lequel les catalyseurs d'hydrodésulfuration des étapes b) et e) comprennent au moins un élément du groupe VIII, au moins un élément du groupe Vlb et un support.

16. Procédé selon l'une des revendications précédentes, dans lequel la coupe essence est issue d'une unité de craquage catalytique ou thermique.

## Patentansprüche

1. Verfahren zur Entschwefelung einer Benzinfraktion, die Schwefelverbindungen, Olefine und Diolefine enthält, umfassend mindestens die folgenden Schritte:
a) Fraktionieren des Benzins, um eine leichte Benzinfraktion LCN und eine erste schwere Benzinfraktion HCN zu gewinnen;
b) Durchführen eines ersten Entschwefelungsschritts der ersten schweren Benzinfraktion HCN im Beisein eines Hydroentschwefelungskatalysators und von Wasserstoff, bei einer Temperatur zwischen 160 und 450 °C, bei einem Druck zwischen 0,5 und 8 MPa, mit einer Flüssigkeitsgeschwindigkeit zwischen 0,5 und 20 h⁻¹ und mit einem Verhältnis zwischen der Wasserstoffmenge, ausgedrückt in Norm m³ pro Stunde, und der Menge an zu behandelnder Fraktion, ausgedrückt in m³ pro Stunde zu den Standardbedingungen zwischen 50 Nm³/m³ und 1000 Nm³/m³, um einen ersten Entschwefelungsabfluss zu erzeugen;
c) teilweises Kondensieren des ersten aus Schritt b) stammenden Entschwefelungsabflusses, um eine gasförmige Phase, die im Wesentlichen von Wasserstoff und H₂S gebildet ist, und eine flüssige Kohlenwasserstoffphase HCN, umfassend das gelöste H₂S, zu erzeugen;
d) Trennen der flüssigen Kohlenwasserstoffphase HCN in eine Zwischenbenzinfraktion MCN und eine zweite schwere Benzinfraktion HHCN;
e) Durchführen eines zweiten Entschwefelungsschritts der zweiten schweren Benzinfraktion HHCN im Beisein eines Hydroentschwefelungskatalysators und von Wasserstoff, bei einer Temperatur zwischen 160 und 450 °C, bei einem Druck zwischen 0,5 und 8 MPa, mit einer Flüssigkeitsgeschwindigkeit zwischen 0,5 und 20 h⁻¹ und mit einem Verhältnis zwischen der Wasserstoffmenge, ausgedrückt in Norm m³ pro Stunde, und der Menge an zu behandelnder Fraktion, ausgedrückt in m³ pro Stunde zu den Standardbedingungen zwischen 50 Nm³/m³ und 1000 Nm³/m³, um eine zweite entschwefelte schwere Benzinfraktion HHCN zu erzeugen;
wobei das Verfahren umfasst:
* einen Schritt c'), in dem das gelöste H₂S der flüssigen Kohlenwasserstoffphase HCN aus dem Schritt c) abgetrennt wird, um eine flüssige Kohlenwasserstoffphase HCN mit niedrigem Gehalt an gelöstem H₂S zu erzeugen, und wobei die flüssige Kohlenwasserstoffphase HCN mit niedrigem Gehalt an gelöstem H₂S in Schritt d) behandelt wird, oder
* einen Schritt d'), in dem das gelöste H₂S von der Zwischenbenzinfraktion MCN aus Schritt d) abgetrennt wird, um eine Zwischenbenzinfraktion MCN mit niedrigem Gehalt an gelöstem H₂S zu erzeugen.

2. Verfahren nach Anspruch 1, bei dem der Schritt c') oder d') durch Strippen mit einem Gas durchgeführt wird.

3. Verfahren nach Anspruch 1, bei dem der Schritt c') oder d') durch eine Absorptionsmethode durchgeführt wird.

4. Verfahren nach Anspruch 1, bei dem der Schritt c') oder d') in einer Stabilisierungssäule durchgeführt wird, die eingerichtet ist, um eine Kohlenwasserstoffphase C4⁻, die das H₂S enthält, und die flüssige Kohlenwasserstoffphase HCN mit niedrigem Gehalt an gelöstem H₂S zu trennen.

5. Verfahren nach Anspruch 1, bei dem die Schritte c') und d) gleichzeitig in einer Fraktionierungssäule durchgeführt werden, die eingerichtet ist, um zu trennen:
* eine gasförmige Phase, die im Wesentlichen das H₂S enthält, das aus dem Kopf der Säule entnommen wird;
* die Zwischenbenzinfraktion MCN, die seitlich unter dem Kopf der Säule entnommen wird;
* die zweite schwere Benzinfraktion HHCN, die am Boden der Säule entnommen wird.

6. Verfahren nach Anspruch 1, bei dem die Schritte c') und d) gleichzeitig in einer Fraktionierungssäule durchgeführt werden, die eingerichtet ist, um zu trennen:
* eine gasförmige Phase, die Kohlenwasserstoffe und H₂S am Kopf der Säule enthält,
* die zweite schwere Benzinfraktion HHCN, die am Boden der Säule entnommen wird.
und bei dem die gasförmige Phase gekühlt und kondensiert wird, um einen Gasstrom zu erzeugen, der im Wesentlichen das H₂S und die Zwischenbenzinfraktion MCN enthält.

7. Verfahren nach Anspruch 6, bei dem die Zwischenbenzinfraktion MCN in eine Stabilisierungssäule geschickt wird.

8. Verfahren nach einem der vorhergehenden Ansprüche, bei dem die Zwischenbenzinfraktion MCN einen Temperaturunterschied ΔT zwischen den Punkten bei 5 % und 95 % destillierter Masse aufweist, der kleiner oder gleich 75 °C ist.

9. Verfahren nach Anspruch 8, bei dem der Temperaturunterschied ΔT zwischen den Punkten bei 5 % und 95 % destillierter Masse der Zwischenbenzinfraktion MCN zwischen 20 und 65 °C beträgt.

10. Verfahren nach einem der vorhergehenden Ansprüche, bei dem die zweite schwere entschwefelte Benzinfraktion HHCN aus dem Schritt e) in eine Stabilisierungssäule geschickt wird.

11. Verfahren nach einem der vorhergehenden Ansprüche, bei dem die Zwischenbenzinfraktion MCN in einem Hydroentschwefelungsschritt f) behandelt wird.

12. Verfahren nach Anspruch 11, bei dem die entschwefelte Zwischenbenzinfraktion MCN aus dem Schritt f) in eine Stabilisierungssäule geschickt wird.

13. Verfahren nach einem der Ansprüche 1 bis 10, bei dem die Zwischenbenzinfraktion MCN in einem flüssig/flüssig Entnahmeverfahren oder extraktiven Destillationsverfahren oder Adsorptionsverfahren behandelt wird, um eine Zwischenbenzinfraktion MCN mit niedrigem Gehalt an schwefelhaltigen Thiophenverbindungen zu erzeugen.

14. Verfahren nach einem der vorhergehenden Ansprüche, bei dem vor dem Schritt a) das Benzin im Beisein von Wasserstoff und eines Katalysators zur selektiven Hydrierung behandelt wird, um die Diolefine zumindest teilweise zu hydrieren und eine Reaktion zur Erhöhung des Molekulargewichts eines Teils der Schwefelverbindungen durchzuführen, wobei der Schritt a) bei einer Temperatur zwischen 50 und 250 °C, mit einem Druck zwischen 0,4 und 5 MPa, mit einer Raumgeschwindigkeit zwischen 0,5 und 20 h⁻¹ und mit einem Verhältnis zwischen der Wasserstoffmenge, ausgedrückt in Norm m³ pro Stunde und der Menge an zu behandelnder Fraktion, ausgedrückt in m³ pro Stunde zu den Standardbedingungen zwischen 2 Nm³/m³ und 100 Nm³/m³ durchgeführt wird.

15. Verfahren nach einem der vorhergehenden Ansprüche, bei dem die Hydroentschwefelungskatalysatoren der Schritte b) und e) mindestens ein Element der Gruppe VIII, mindestens ein Element der Gruppe Vlb und einen Träger umfassen.

16. Verfahren nach einem der vorhergehenden Ansprüche, bei dem die Benzinfraktion von einer Einheit zum katalytischen oder thermischen Kracken kommt.

## Claims

1. A process for the desulphurization of a gasoline containing sulphur-containing compounds, olefins and diolefins, the process comprising at least the following steps:
a) fractionating the gasoline in order to recover a light gasoline cut LCN and a first heavy gasoline cut HCN;
b) carrying out a first step for desulphurization of the first heavy gasoline cut HCN in the presence of a hydrodesulphurization catalyst and hydrogen, at a temperature in the range 160°C to 450°C, at a pressure in the range 0.5 to 8 MPa, with a liquid velocity in the range 0.5 to 20 h⁻¹ and with a ratio between the flow rate of hydrogen, expressed in normal m³ per hour, and the flow rate of feed to be treated, expressed in m³ per hour under standard conditions, in the range 50 Nm³/m³ to 1000 Nm³/m³ in a manner such as to produce a first desulphurization effluent;
c) partially condensing the first desulphurization effluent obtained from step b) in a manner such as to produce a gaseous phase essentially constituted by hydrogen and H₂S and a liquid hydrocarbon phase HCN comprising dissolved H₂S;
d) separating the liquid hydrocarbon phase HCN into an intermediate gasoline cut MCN and a second heavy gasoline cut HHCN;
e) carrying out a second step for desulphurization of the second heavy gasoline cut HHCN in the presence of a hydrodesulphurization catalyst and hydrogen, at a temperature in the range 160°C to 450°C, at a pressure in the range 0.5 to 8 MPa, with a liquid velocity in the range 0.5 to 20 h⁻¹ and with a ratio between the flow rate of hydrogen, expressed in normal m³ per hour, and the flow rate of feed to be treated, expressed in m³ per hour under standard conditions, in the range 50 Nm³/m³ to 1000 Nm³/m³ in a manner such as to produce a desulphurized second heavy gasoline cut HHCN,
the process comprising:
• a step c') in which the dissolved H₂S of the liquid hydrocarbon phase HCN obtained from step c) is separated in order to produce a liquid hydrocarbon phase HCN with a low dissolved H₂S content and said liquid hydrocarbon phase HCN with a low dissolved H₂S content being treated in step d), or
• a step d') in which the dissolved H₂S of the intermediate gasoline cut MCN obtained from step d) is separated in order to produce an intermediate gasoline cut MCN with a low dissolved H₂S content.

2. The process as claimed in claim 1, in which step c') or d') is carried out by stripping with a gas.

3. The process as claimed in claim 1, in which step c') or d') is carried out by means of an absorption method.

4. The process as claimed in claim 1, in which step c') or d') is carried out in a stabilization column configured to separate a C4⁻ hydrocarbon phase containing H₂S and the liquid hydrocarbon phase HCN with a low dissolved H₂S content.

5. The process as claimed in claim 1, in which steps c') and d) are carried out concomitantly in a fractionation column configured to separate:
• a gaseous phase essentially containing H₂S which is withdrawn from the head of the column;
• the intermediate gasoline cut MCN which is withdrawn as a side stream below the column head;
• the second heavy gasoline cut HHCN which is withdrawn from the bottom of the column.

6. The process as claimed in claim 1, in which steps c') and d) are carried out concomitantly in a fractionation column configured to separate:
• a gaseous phase containing hydrocarbons and H₂S from the head of the column;
• the second heavy gasoline cut HHCN which is withdrawn from the bottom of the column;
and in which said gaseous phase is cooled and condensed in a manner such as to produce a gaseous stream essentially containing H₂S and the intermediate gasoline cut MCN.

7. The process as claimed in claim 6, in which the intermediate gasoline cut MCN is sent to a stabilization column.

8. The process as claimed in one of the preceding claims, in which the intermediate gasoline cut MCN has a temperature difference ΔT between the 5% and 95% distilled weight points which is less than or equal to 75°C.

9. The process as claimed in claim 8, in which the temperature difference ΔT between the 5% and 95% distilled weight points for the intermediate gasoline cut MCN is in the range 20°C to 65°C.

10. The process as claimed in one of the preceding claims, in which the second desulphurized heavy gasoline cut HHCN obtained from step e) is sent to a stabilization column.

11. The process as claimed in one of the preceding claims, in which the intermediate gasoline cut MCN is treated in a hydrodesulphurization step f).

12. The process as claimed in claim 11, in which the desulphurized intermediate gasoline cut MCN obtained from step f) is sent to a stabilization column.

13. The process as claimed in one of claims 1 to 10, in which the intermediate gasoline cut MCN is treated in a liquid/liquid extraction process or an extractive distillation process or adsorption process in a manner such as to produce an intermediate gasoline cut MCN with a low thiophenic sulphur-containing compounds content.

14. The process as claimed in one of the preceding claims, in which prior to step a), the gasoline is treated in the presence of hydrogen and a selective hydrogenation catalyst in a manner such as to at least partially hydrogenate the diolefins and carry out a reaction to increase the molecular weight of a portion of the sulphur-containing compounds, step a) being operated at a temperature in the range 50°C to 250°C, at a pressure in the range 0.4 to 5 MPa, with a space velocity in the range 0.5 to 20 h⁻¹ and with a ratio between the flow rate of hydrogen expressed in normal m³ per hour and the flow rate of the feed to be treated expressed in m³ per hour under standard conditions, in the range 2 Nm³/m³ to 100 Nm³/m³.

15. The process as claimed in one of the preceding claims, in which the hydrodesulphurization catalysts of steps b) and e) comprise at least one element from group VIII, at least one element from group VIb and a support.

16. The process as claimed in one of the preceding claims, in which the gasoline cut is obtained from a catalytic cracking or thermal cracking unit.
